(19) **Europäisches Patentamt European Patent Office Office européen des brevets**

(11) **EP 1 096 249 B1**

(12) **EUROPEAN PATENT SPECIFICATION**

(45) Date of publication and mention
of the grant of the patent:
**01.05.2013 Bulletin 2013/18**

(51) Int Cl.:
*G06K 9/46* (2006.01)          *G01N 21/88* (2006.01)
*G01N 27/84* (2006.01)          *G01N 21/91* (2006.01)
*G06T 7/00* (2006.01)

(21) Application number: **00309094.1**

(22) Date of filing: **16.10.2000**

(54) **Nondestructive flaw inspection method and apparatus**

Verfahren und Vorrichtung zur zerstörungsfreien Prüfung

Procédé et dispositif pour l'inspection non-destructive

(84) Designated Contracting States:
**DE FR GB NL**

(30) Priority: **26.10.1999 JP 30348099**

(43) Date of publication of application:
**02.05.2001 Bulletin 2001/18**

(73) Proprietor: **Hitachi-GE Nuclear Energy, Ltd.
Hitachi-shi
Ibaraki 317-0073 (JP)**

(72) Inventors:
 • **Nomoto, Mineo,
c/o Hitachi, Ltd.,
Int. Prop. Grp.
Chiyoda-ku,
Tokyo 100-8220 (JP)**
 • **Katsuta, Daiske,
c/o Hitachi Ltd.,
Int. Prop. Grp.
Chiyoda-ku,
Tokyo 100-8220 (JP)**
 • **Asano, Toshio,
c/o Hitachi, Ltd.,
Int. Prop. Grp.
Chiyoda-ku,
Tokyo 100-8220 (JP)**
 • **Sakai, Kaoru,
c/o Hitachi Ltd.,
Int. Prop. Grp.
Chiyoda-ku,
Tokyo 100-8220 (JP)**
 • **Taguchi, Tetsuo,
c/o Hitachi, Ltd.,
Int. Prop. Grp
Chiyoda-ku,
Tokyo 100-8220 (JP)**
 • **Tanaka, Isao,
c/o Hitachi, Ltd.,
Int. Prop. Grp.
Chiyoda-ku,
Tokyo 100-8220 (JP)**

(74) Representative: **Calderbank, Thomas Roger et al
Mewburn Ellis LLP
33 Gutter Lane
London
EC2V 8AS (GB)**

(56) References cited:
WO-A-00/60344          US-A- 5 039 868
US-A- 5 047 851

 • PATENT ABSTRACTS OF JAPAN vol. 1999, no. 02, 26 February 1999 (1999-02-26) & JP 10 300688 A (FUJIMORI KOGYO KK), 13 November 1998 (1998-11-13)
 • PATENT ABSTRACTS OF JAPAN vol. 017, no. 457 (P-1597), 20 August 1993 (1993-08-20) & JP 05 107202 A (HITACHI LTD;OTHERS: 01), 27 April 1993 (1993-04-27)
 • PATENT ABSTRACTS OF JAPAN vol. 007, no. 176 (P-214), 4 August 1983 (1983-08-04) & JP 58 082147 A (TOKYO SHIBAURA DENKI KK), 17 May 1983 (1983-05-17)
 • PATENT ABSTRACTS OF JAPAN vol. 016, no. 577 (P-1460), 16 December 1992 (1992-12-16) & JP 04 223262 A (NIHON DENJI SOTSUKI KK), 13 August 1992 (1992-08-13)
 • PATENT ABSTRACTS OF JAPAN vol. 1995, no. 01, 28 February 1995 (1995-02-28) & JP 06 300739 A (NIPPON STEEL CORP), 28 October 1994 (1994-10-28)

**EP 1 096 249 B1**

**Description**

The present invention relates to a method for inspecting a crack in a metal surface or the like, and particularly, to an inspection method and apparatus for nondestructive inspection such as liquid penetrant inspection and magnetic particle testing.

Liquid penetrant inspection and magnetic particle testing are nondestructive inspection methods for inspecting a flaw such as a fracture (crack) having an opening in a metal surface. In the liquid penetrant inspection, normally, red liquid called penetrant is applied to an inspected surface, then the penetrant is wiped off after a predetermined period, and white powder called development agent is applied to the surface. If there is a flaw such as a crack, the penetrant remaining in the crack appears by capillary phenomenon to the surface, to form a red flaw indication.

On the other hand, in case of magnetic particle testing, a solution including fluorescent magnetic powder is dispersed on a object under inspection which is a magnetic substance, then the object under inspection is magnetized. If there is a flaw such as a crack, the magnetic flux is concentrated on the flaw. The fluorescent magnetic powder is attracted, and when ultraviolet light is emitted, the magnetic powder emits green light as a flaw indication. Conventionally, these flaw indication have been checked by visual observation as flaw inspection.

In case of conventional inspection by visual observation, a flaw may be overlooked because of an inspector's fatigue, or the inspection results may differ due to difference among individual inspectors. Further, the inspection result is recorded merely as a word "passed" or the like. Thus there is a problem in reliability of inspection.

Further, as to magnetic particle testing, an automatic inspection apparatus has been developed for important and mass-production parts, however, such apparatus is a specialized apparatus, various shaped parts cannot be readily inspected.

Further, as to liquid penetrant inspection, since surface colors must be detected as a highly-precise two-dimensional distribution, even if there is a colorimeter capable of high-precision chromaticity measurement by point, two-dimensional sweeping is necessary. It is difficult from the point of inspection period and cost to automatically inspect various shaped parts.

Further, in a case where a object under inspection is large, it may be difficult to discriminate a part of the object corresponding to an image obtained by automatic inspection, or to discriminate a part of the object corresponding to a detected flaw.

Further, the economical value will be dramatically improved if both of the liquid penetrant inspection and the magnetic particle testing can be performed automatically by one apparatus. Such apparatus or technique, however, has not been provided.

US 5047851 discloses a process and device for detecting and evaluating surface cracks in work pieces. A video camera picture is digitized and processed to produce a binary picture of any cracks present, and a sorting report is triggered when a preselected threshold level is exceeded.

JP 10300688 discloses a method of preventing regular reflection light from impinging onto a light receiver in order to accurately monitor the color of, or presence or absence of, a defect in a specimen. Two polarization filters are arranged to ensure that irregular reflection light is received by the light receiver.

JP 06300739 discloses a magnetic particle method of testing for flaws in which a color camera is used to determine characteristics of the flow such as width and length.

WO-A-00/60344, corresponding to EP-A-1167964, which is prior art under Article 54(3) EPC, discloses a method and apparatus for flaw inspection using liquid penetrant testing in which a penetrant liquid is applied to the surface of a sample to be investigated, the surface is illuminated, and the image of the surface obtained is a color video camera is processed to extract flow candidates, which are then displayed for inspection.

A related method and apparatus for non-destructive testing has also been disclosed by EP 1167964 A1 of the applicant (Art. 54(3)EPC).

In a first aspect the present invention provides a flaw inspection method by liquid penetrant testing as defined by claim 1, the method comprising:

illuminating a surface of a sample to be inspected;
obtaining an image of the surface by a color video camera, the image containing RBG data;
processing the image obtained by the color video camera to extract flaw candidates from the image displayed; and
displaying an image of an extracted flaw candidate obtained by said processing step,
wherein;
a red penetrant liquid is applied to the surface of the sample to be inspected and subsequently a white powder development agent is applied to the surface;
the surface of the sample is illuminated with polarized light; and
before the processing step, said image obtained by said color video camera is calibrated by using conversion parameters unique to said color video camera which are used to convert the RBG data of the image to chromaticity x, y and luminance Y of the obtained image, and which are calculated from data of an image of a color chart for calibration which contains white, pink and red picked up by said color video camera.

In a second aspect, the present invention provides an apparatus for liquid penetrant testing as defined by claim 5, comprising:

an illuminator which is arranged to illuminate a surface of a sample to be inspected, an image pickup unit which is arranged to pick up an image of the surface by a color video camera, the image containing RBG data;
a computer having a processor for processing an image picked up by said image pickup unit to extract flaw candidates from the image picked up;
a memory means for storing an image processed by said processor, and
a display unit which is arranged to display said image stored in said memory,
wherein;
said illuminator is arranged to illuminate said sample with polarized light when the surface having a red penetrant liquid applied thereto and subsequently a white powder development agent applied thereto;
said processor is arranged to calibrate said image using conversion parameters which are used to convert the RBG data of the image to chromaticity x, y and luminance Y of the obtained image, and which are calculated from data of an image of a color chart for calibration which contains white, red and plural colors between white and red picked up by said image pickup unit.

In the present invention described below, a color video camera is used to perform image pickup on an object under inspection. Note that if the color video camera is merely used, in the liquid penetrant inspection, image pickup cannot be properly performed by positive reflection light from the object under inspection by illumination, which causes a difficulty in discrimination between these materials from a flaw. Accordingly, in the present invention, to remove the positive reflection light, a polarizing filter may be provided in both luminaire and camera. Further to cut the ultraviolet light, in embodiments which use magnetic particle testing as well as liquid penetrant inspection, a filter may be provided in front of the camera.

Further, in an embodiment of the present invention, the color camera and a white illumination light and an ultraviolet illumination light are provided in one probe and the probe is used in liquid penetrant inspection magnetic testing. In case of liquid penetrant inspection, the xy chromaticity of object under inspection surface is calculated from a video signal from the color video camera, to detect a red flaw indication.

Further, to prevent oversight and over detection in automatic inspection, in an embodiment of the present invention, the inspection result is displayed as a color image, and a portion judged as a flaw in the automatic inspection is surrounded by a rectangle block, so that an inspector can check each rectangular portion in an original image to judge whether or not it is a true flaw. The original image and the inspection result are stored as a record in a magneto-optic disk or the like.

Further, in an embodiment of the present invention, if the object under inspection is e.g. long and cannot be seen within a view, a scale is provided in an image pickup view, and image pickup is performed on the scale and an inspection image simultaneously, so as to specify the inspection position.

Further, in an embodiment of the present invention, in the flaw inspection method based on the liquid penetrant inspection, to perform color calibration on the color video camera, conversion parameters for xyY values unique to the color video camera are generated by using signals obtained by image pickup by the color video camera on R (red), G (green), B (blue) and W (white) reference colors. An image obtained by image pickup on the inspected surface of the object under inspection is temporarily converted with the conversion parameters, and a flaw candidate is detected by using the converted image.

These and other objects, features and advantages of the embodiments of their invention will be apparent from the following more particular description of preferred embodiments of the invention, as illustrated in the accompanying drawings.

IN THE DRAWINGS:

Fig. 1 is a perspective view showing an example of object under inspection handled in one of the embodiment of the present invention; (a)is one of an example of liquid penetrant inspection, (b) is one of an example of magnetic particle testing for comparison with the present invention.
Fig. 2 is a front view of the schematic construction of the flaw inspection apparatus showing one working example according to the embodiment of the present invention.

Fig. 3 is a front view of the monitor display screen showing the effect of the polarizing filter; (a) in case of a filter is not attached, (b) in case of a filter is attached.

Fig. 4 is a front view of the monitor display screen showing the effect of the ultraviolet light cut filter; (a) in case of a filter is not attached, (b) in case of a filter is attached.

Fig. 5 is a flowchart showing the flow of automatic inspection method in the liquid penetrant inspection according to the embodiment of the present invention.

Fig. 6 shows the xy chromaticity diagram.

Fig. 7 is a front view of the construction for camera calibration.

Fig. 8 is a flowchart showing the flow of camera calibration processing.

Fig. 9 (a) is a chromaticity two-dimensional histogram, (b) is a x chromaticity value of the largest numberof pixels, (c) is a y chromaticity value of the largest numberof.

Fig. 10 (a) is a diagram which indicates chromaticity at position (i,j) of an image, (b) is a xy chromaticity plane or chromaticity diagram, (c) is a diagram which indicates hue at position (i,j) of an image.

Fig. 11 (a) is a diagram which indicates chromaticity at position (i,j) of an image, (b) is a xy chromaticity plane or chromaticity diagram, (c) is a diagram which indicates hue at position (i,j) of an image.

Fig. 12 is a xy chromaticity plane showing the method for obtaining a flaw candidate area.

Fig. 13 (a) is a flaw candidate area, (b) is a diagram showing a color difference with respect to the reference white on 132 in (a), (c) is a flaw area, (d) is a color difference differentiation distribution.

Fig. 14 (a) indicates a judgment line 144a in a color difference and color difference differentiation plane in case of a flaw and a pseudo flaw are apparently distinguishable, (b) indicates a judgment line 144b in a color difference and color difference differentiation plane in case of a flaw and a pseudo flaw are not separeted.

Fig. 15 is a flowchart showing an example of image processing algorithm in magnetic particle testing for comparison with the present invention.

Fig. 16 (a) is an image of liminance distribution of a flaw and a pseudo flaw, (b) is is a luminance distribution on line 161 in (a), (c) is an image of flaw, (d) indicates a judgement threshold value 164 in a differentiation diagram.

Fig. 17 is a flowchart showing the process of flaw check and data storage in the embodiment of the present invention.

Fig. 18 is a diagram showing an example of the method for generating the flaw candidate marker in the embodiment of the present invention.

Fig. 19 is a diagram showing an example of the flaw candidate display method in the embodiment of the present invention.

Fig. 20 is a diagram showing an example of the method for specifying the inspection position according to the embodiment of the present invention.

Fig. 21 is a diagram showing an example of inspection image including information specifying the inspection position according to the embodiment of the present invention.

Fig. 22 is a diagram showing an example of the structure of inspection result data stored in the storage device 7;(a) is an example of image pick up ranges on a inspection surface, (b) is an entire image information by each object, (c) illustrates divided images of the object.

Hereinafter, a working example of the present invention will be described with reference to the drawings.

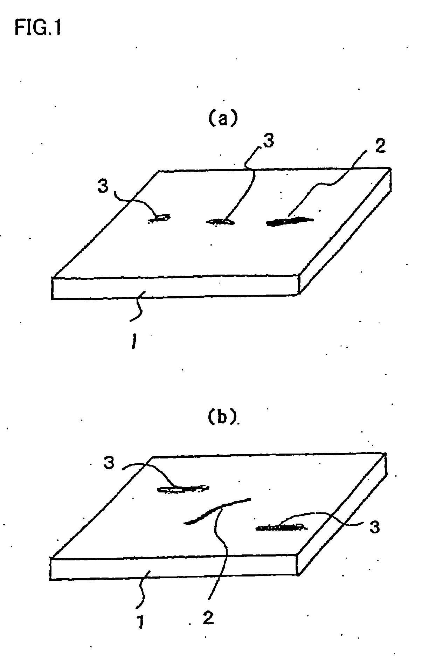

Fig. 1 shows an example of a flaw to be inspected in the present invention.

(a) shows an example of liquid penetrant inspection. A object under inspection 1 is coated with white development liquid, and a flaw 2 (contrast: high) and a pseudo flaw 3 (contrast: low) are observed. In the liquid penetrant inspection, the flaw 2 is enhance-displayed as a red indication mark. The pseudo flaw appears as a pale red indication mark when the penetrant has remained in a surface grinding streak or the like and has not been completely wiped out.

(b) shows an example of magnetic particle testing for comparison with the present invention. Fluorescent magnetic powder is already applied to the object under inspection 1 having the flaw 2 and the object under inspection is magnetized. When the object is illuminated with ultraviolet light, the fluorescent magnetic powder collected to the flaw 2 by magnetization emits green light. However, if the object under inspection 1 has e.g. a welded portion, as the fluorescent magnetic powder is collected along the bead, the pseudo flaw 3 in green may appear.

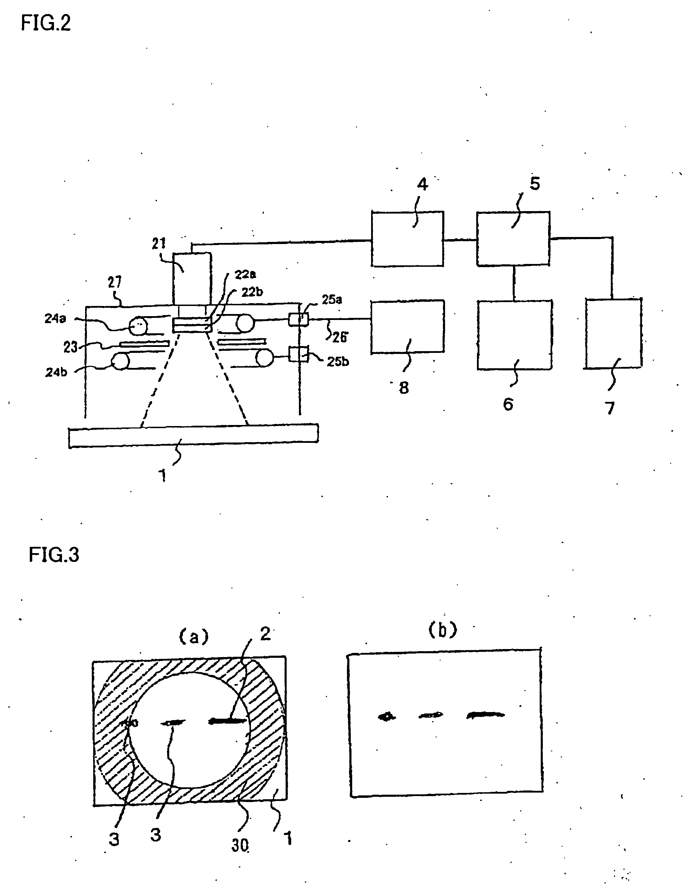

Fig. 2 is a block diagram showing the construction of a flaw inspection apparatus according to the present invention. The object under inspection 1 has the flaw 2 and the pseudo flaw 3. Image pickup is performed on the object by using a color video camera 21. In case of liquid penetrant inspection, a white illumination light 24a is turned on while in case of magnetic particle testing, which falls outside the scope of the present invention, a ultraviolet illumination light 24b is turned on. the white illumination light 24a is connected to a white illumination light connector 25a, and is connected to an illumination power source 8 via an illumination cable 26.

In case of magnetic particle testing, which falls outside the scope of the present invention, the illumination cable 26 is connected to a ultraviolet illumination connector 25b. To avoid influence by extraneous light, a hood 27 is attached to the light. In Fig. 2, the illumination light is a ring-shaped light, however, one or more bar-shaped light may be employed.

A color video signal from the color video camera 21 includes independent R, G and B signals, or it may be a composite video signal. In any case, the video signal is stored as R, G and B image data in a color image memory 4. The color image data is analyzed by a computer 5, and the result of flaw detection is displayed on a color monitor 6. The computer 5 having a memory for storing a program and a data, a processor for processing a detected data by the color video camera 21 and an input/output interface connected to a keyboard (not shown) and the color monitor 6.

Further, the flaw inspection result is stored in a data storage device 7. Further, the image displayed on the color monitor 6 can be print-outputted by a printer (not shown) in accordance with necessity.

A polarizing filter 22a and a ultraviolet-light cut filter 22b are attached to the front side of the lens of the color video camera 21. Further, a polarizing filter plate 23 is provided below the white illumination light 24a. The polarizing filter 22a and the polarizing filter plate 23 are used for preventing projection of illumination light upon liquid penetrant inspection and positive reflection from the object under inspection 1. The polarizing filter 22a is rotated while an output video signal from the color video camera 21 is watched, and the polarizing filter is fixed to a position where the projection of illumination light and reflection are most prevented. The polarizing filter 22a may be automatically adjusted based on the video output signal from the color video camera 21.

The ultraviolet light cut filter is used in magnetic particle testing methods not embodied by the present invention for preventing unnecessary light emission from attached foreign materials and the like by the ultraviolet light illumination light 24b.

Fig. 3 illustrates the effects of the polarizing filter 22a and the polarizing filter plate 23.

(a) shows a display on the monitor screen when the filters are not used; and (b), a display on the monitor screen when the filters are attached and the rotational angle of the filter is adjusted. In case of (a), projection of illumination light 30 disturbs flaw detection. The illumination light is projected in a ring shape since the white illumination light 24a is a ring type light. In case of (b), the projection does not occur.

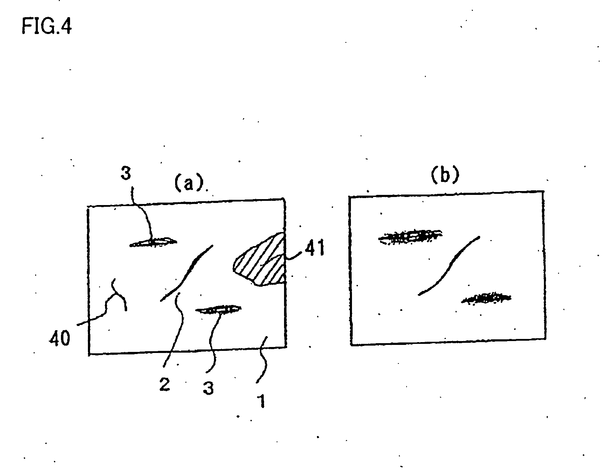

Fig. 4 illustrates the effect of the ultraviolet light cut filter 22b in magnetic particle testing, which is not embodied by the present invention. (a) shows a display on the monitor screen when the filter is not used; and (b), a display on the monitor screen when the filter is attached. In case of (a), light emission from a foreign material 40 such as lint and positive reflection 41 from the object under inspection 1, obtain by the image pickup by the color video camera 21, disturb flaw inspection. In case of (b), these noise are cut, and the image shows only light emission from the fluorescent magnetic powder as in case of visual observation of the produce under inspection 1 by a human inspector.

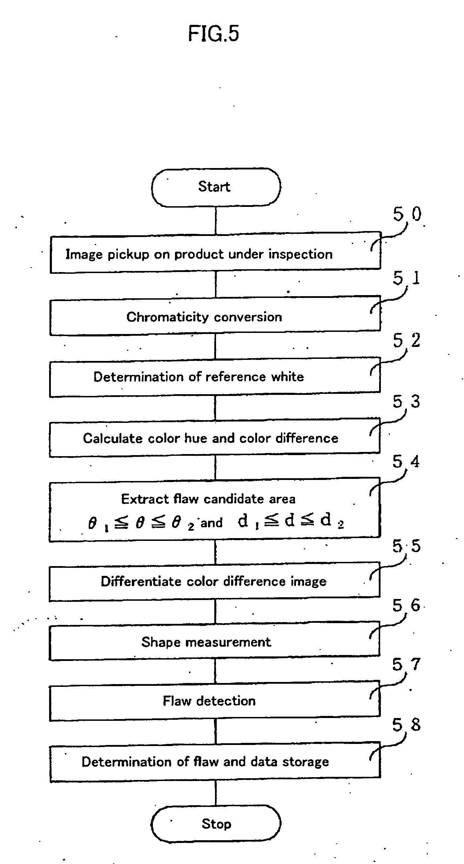

First, the method of crack flaw detection in a liquid penetrant inspection image will be described with reference to Figs. 5 to 14. Fig. 5 shows an automatic detection method for the flaw 2 in the liquid penetrant inspection.

First, image pickup 50 is performed, using the white illumination light 24a, on the object under inspection 1 coated with the development agent. Next, chromaticity conversion 51 is performed to obtain xy chromaticity values of respective pixels from obtained R, G and B color image data.

Next, determination of reference white 52 is performed to calculate reference white chromaticity of the development liquid, and calculation of color hue and color difference 53 is performed in each position of image with respect to the reference white.

Thereafter, to perform extraction of flaw candidate area 54, the area of color hue and color difference within a specific range is extracted by binarization.

In most cases the true flaw 2 has a clear outline, and a pseudo flaw has an unclear outline. Accordingly, differentiation of color difference image 55 is performed, to obtain the change rate of color difference in the outline portion of the extracted flaw candidate area. Next, shape measurement 56 is performed to measure the area, the ratio of length to width, the length of the flaw candidate area. Thereafter, flaw detection 57 is performed to detect only an area having a high color difference change rate, and length and area of predetermined or greater values as the true flaw 2. Further, the inspection result is displayed on the color monitor 6 for the inspector's flaw checking, then image data, shape data, positional information and the like are stored in the storage device 7, or print-outputted and stored as a hard copy (58).

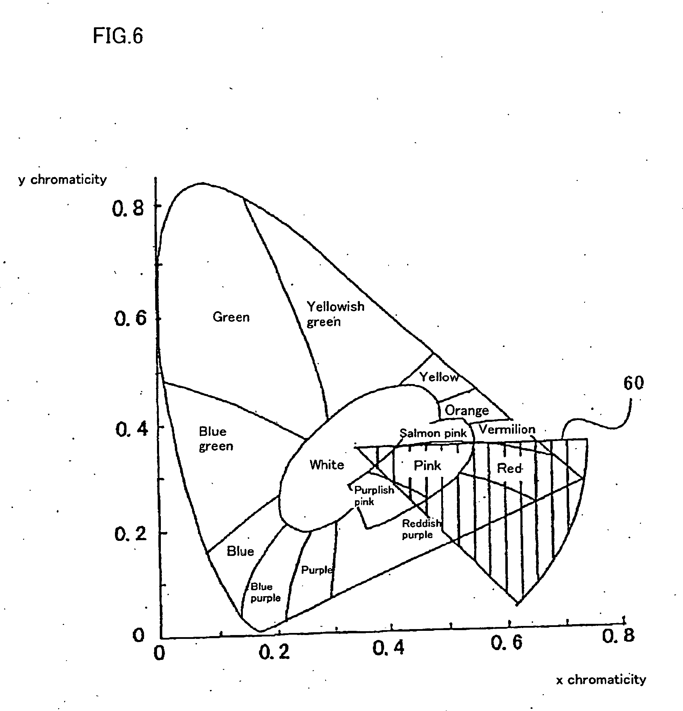

Inspection by color requires quantitative color evaluation. Accordingly, at the chromaticity conversion step 51, the RGB data of the obtained color image is converted to chromaticity x, y, and luminance Y defined by CIE (Commission Internationale de l'Eclairage), and inspection is performed using the data. The two-dimensional orthogonal coordinate representation of the chromaticity x, y, as shown in Fig. 6 is called a chromaticity diagram. In the chromaticity diagram, respective colors are arranged around white as the center, and the respective colors are vivid as they are away from white. Hereinafter, a color tone will be called a color hue, vividness of respective colors, saturation, and a distance between two chromaticity values on the chromaticity diagram, a color difference. Fig. 6 shows a color difference range 50 of the liquid penetrant inspection image.

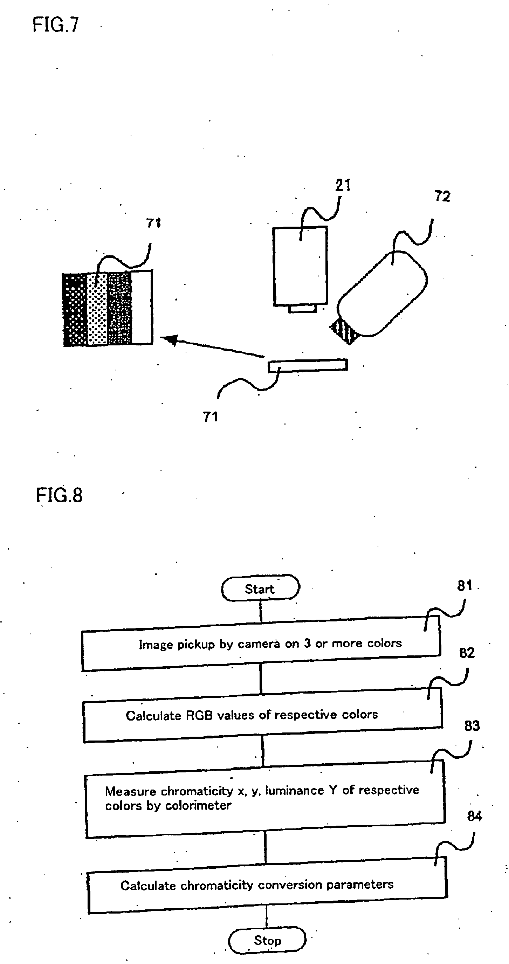

In the present method, to convert the RGB data to the chromaticity x, y and luminance Y with high precision, color calibration is performed in advance using a camera calibration color chart 71 as shown in Fig. 7. Fig. 8 shows the flow of the processing. The camera calibration color chart 71 is coated with three or more colors. It is subjected to image pickup by the color video camera 21 (81), to calculate RGB values of respective colors (82). Further, the chromaticity x, y and luminance Y of these colors are measured by a colorimeter 72 (83). The relation between RGB values and the xyY values is represented by (Expression 1) and (Expression 2).

$$\begin{pmatrix} X \\ Y \\ Z \end{pmatrix} = \begin{pmatrix} a_{11} & a_{12} & a_{13} \\ a_{21} & a_{22} & a_{23} \\ a_{31} & a_{33} & a_{33} \end{pmatrix} \begin{pmatrix} R \\ G \\ B \end{pmatrix} \qquad \cdots (\text{Expression 1})$$

Note that X, Y and Z are called tristimulus values.

$$\text{Chromaticity: } x = \frac{X}{X + Y + Z} \quad y = \frac{Y}{X + Y + Z}$$

$$\text{Luminance: } Y \qquad \qquad \cdots (\text{Expression 2})$$

Accordingly, if the RGB values of the respective colors obtained from the camera are substituted into (Expression 1) and (Expression 2) to calculate the xyY values, and values $a_{11}$ to $a_{33}$ corresponding to the xyY values measured by the colorimeter are obtained, conversion parameters unique to the camera can be obtained. Since the number of unknown parameters is 9, the parameters can be calculated by at least three color RGB values $(R_1G_1B_1)$ to $(R_3G_3B_3)$ and corresponding xyY values of the colorimeter $(x_1y_1Y_1)$ to $(x_3y_3Y_3)$.

From (Expression 2), as XYZ can be calculated from the xyY values by the following (Expression 3),

$$X = Y \times x/y, \quad Y = Y, \quad Z = Y \times (1-x-y)/y \quad \cdots (\text{Expression 3})$$

The xyY values of the three colors by the colorimeter are substituted into (Expression 3), to obtain XYZ, and the XYZ are substituted into (Expression 1).

$$\begin{pmatrix} X_1 \\ Y_1 \\ Z_1 \end{pmatrix} = \begin{pmatrix} a_{11} & a_{12} & a_{13} \\ a_{21} & a_{22} & a_{23} \\ a_{31} & a_{32} & a_{33} \end{pmatrix} \begin{pmatrix} R_1 \\ G_1 \\ B_1 \end{pmatrix} \quad (j = 1,2,3) \quad \cdots (\text{Expression 4})$$

By this expression, the conversion parameters $a_{11}$ to $a_{33}$ unique to the camera are obtained (84), and the xyY values equal to those of the colorimeter can be obtained from the RGB values of the camera.

As the camera calibration color chart 71 used in the liquid penetrant inspection, the arrangement of R, G, B and W reference colors and plural types of colors changing from white of the development liquid to red of the penetrant is preferable for color calibration. The reproducibility of conversion parameters can be checked by selecting white which is close to that of the development liquid, pink as a color of flaw candidate, and red corresponding to a flaw, from a chromaticity range 60 of liquid penetrant inspection image in Fig. 6, in a stepwise manner, and measuring the xyY values, and by comparing these values with respective xyY values calculated by using the previously-generated conversion parameters for the xyY values unique to the camera. Reliable and high-precision chromaticity measurement can be easily realized by checking the color reproducibility periodically by using the color chips as shown in Fig. 6 in (or preferably prior to) liquid penetrant inspection.

Further, the present inventors have observed that the reference colors of the above color chart differ depending on color temperature of illumination light source. That is, in case of liquid penetrant inspection with the white illumination light used in the embodiment in Fig. 2 as the light source, and, in case of liquid penetrant inspection with a halogen lamp as the light source.

Since the chromaticity range in Fig. 6 may differ the color calibration chromaticity must be selected in correspondence with the light source.

Further, the chromaticity from white to red differs depending on the difference of color tone of surface state of object under inspection (a surface of metal such as stainless, a leather-like dark surface of iron or the like, a rusty brown surface etc.). Accordingly, the conversion to xyY can be performed with higher precision by performing color calibration with increased numbers of interpolation colors in white, pink and red.

Further, it is preferable to select the chromaticity of the reference colors of red, green, blue, white, and colors changing from white to red, in correspondence with the chromaticity of development liquid and penetrant.

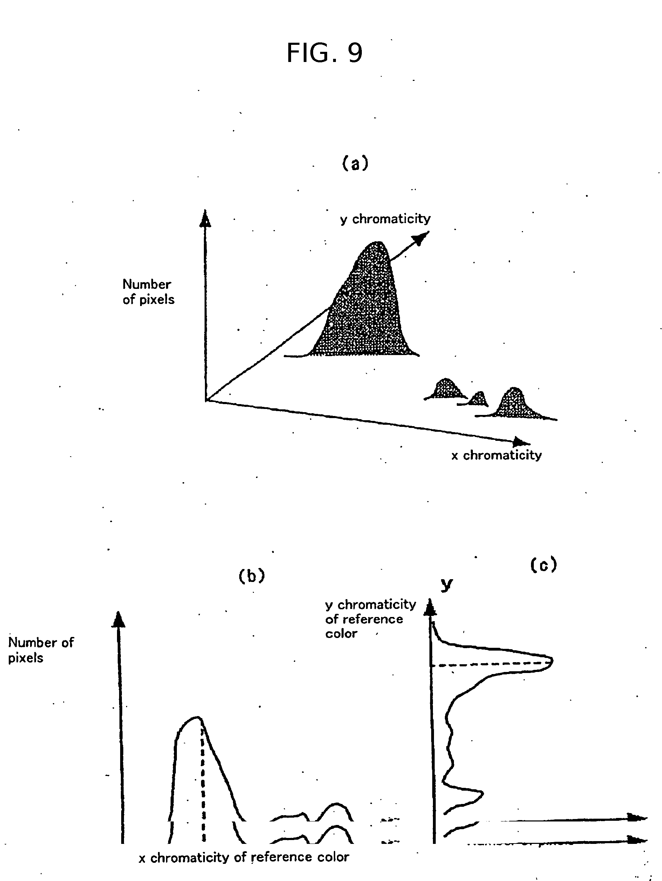

When the RGB values obtained from the camera are chromaticity-converted to the xyY values using the conversion parameters unique to the camera calculated by calibration in advance, and the chromaticity distribution in the image is calculated, at step 52, calculation is performed with the chromaticity of the development liquid, i.e., the chromaticity of portions other than a flaw, as a reference value. First, the chromaticity values x, y of each pixel in the image are examined, and the number of pixels of each x, y values is counted, thus a chromaticity two-dimensional histogram is generated as the graph of Fig. 9(a).

Then, the x chromaticity value of the largest number of pixels (Fig. 9(b)) and the y chromaticity value of the largest number of pixels (Fig. 9(c)) in the image are obtained. As most of the image portions include no flaw, the x, y chromaticity values of the peak value in the two-dimensional chromaticity distribution are the xy chromaticity values of the reference white.

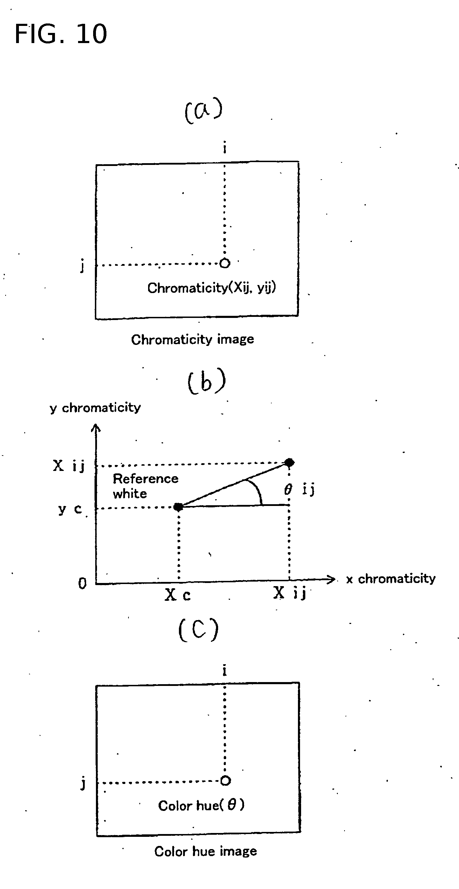

At step 53, the color hue and color difference in each position on the image with respect to the reference white are calculated. Assuming that the chromaticity of the reference white is $(x_c, y_c)$, and the chromaticity in a position in the image is $(x_{ij}, y_{ij})$, the color hue in a position (i, j) is calculated in a direction toward the reference color on the chromaticity diagram as shown in Fig. 10. The calculation expression is as represented by (Expression 5).

$$\text{Color hue: } \theta_{ij} = \tan^{-1}\left(\frac{y_{ij} - y_c}{x_{ij} - x_c}\right) \quad \dots\text{(Expression 5)}$$

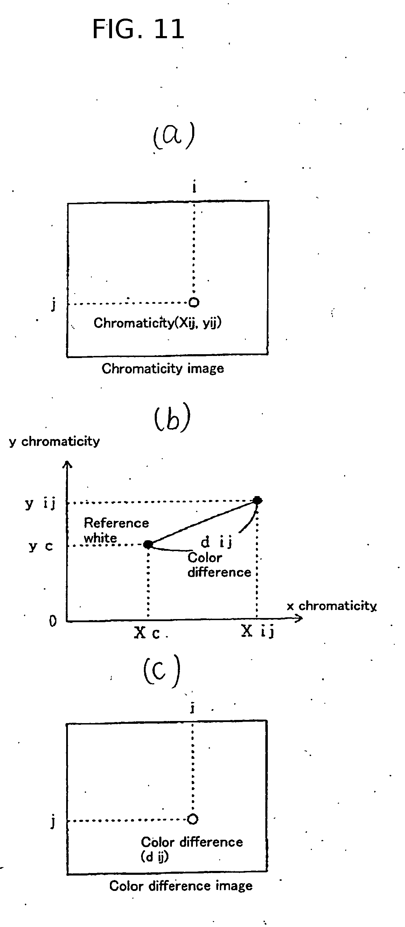

Further, as shown in Fig. 11, the color difference in the position (i, j) is calculated with a distance from the reference color on the chromaticity diagram. The calculation expression is as represented by (Expression 6).

$$\text{Color difference:}$$

$$d_{ij} = \sqrt{\left(x_{ij} - x_c\right)^2 + \left(y_{ij} - y_c\right)^2} \quad \dots\text{(Expression 6)}$$

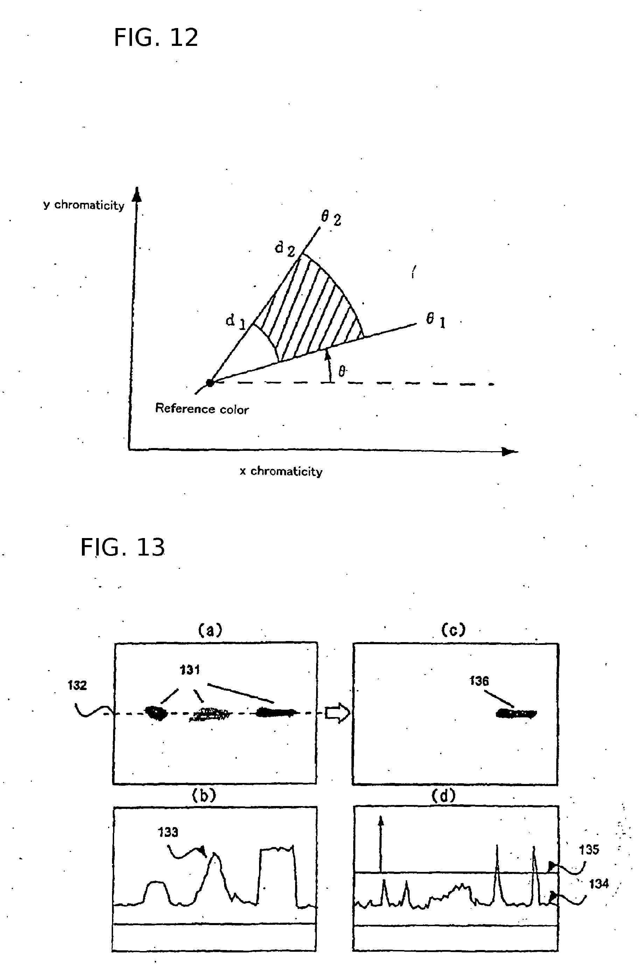

As shown in Fig. 12, from the color hue and color difference in each position of the image with respect to the reference white, calculated as above, the range to be detected as a flaw is limited in the color hue (in Fig. 12, the color hue stands in the range $_1 \leq _2$), and the level of difference in vividness from the reference white is limited in the color difference (in Fig. 12, the color difference d stands in the range $d_1 \leq d \leq d_2$). Then a portion within the range is extracted as a flaw candidate area.

Among the flaw candidates obtained by limiting the range in the color hue and color difference in this manner, there is an area which is not to be detected as a flaw. For example, an area where the chromaticity gradually changes with respect to the reference white is not a flaw, but an area with a clear outline is a flaw. Accordingly, an area with smooth color change with respect to peripheral color is regarded as a normal portion or the pseudo flaw 3, and only an area with radical change is regarded as the flaw 2. At step 55, regarding a flaw candidate area, the change amount of color difference with respect to the reference white is obtained, and only an area where the change amount value is equal to or greater than a predetermined value is regarded as a flaw.

Referring to Fig. 13, (a) shows a flaw candidate area 131 extracted at step 54. Numeral 133 in (b) denotes a graph of color difference with respect to the reference white on 132 in (a). Further, the change amount of the color difference 133 in each position on 132, i.e., differentiation of 133 is color difference differentiation distribution 134 in (d). In this manner, in a position where the change amount of color difference with respect to the reference white is small, the differentiated value is small. As shown in (d), only an area where the differentiated value is greater than a constant value 135 is regarded as a flaw area. As a result, only a flaw area 136 as in (c) where the color difference is large, i.e., the outline is clear, is detected.

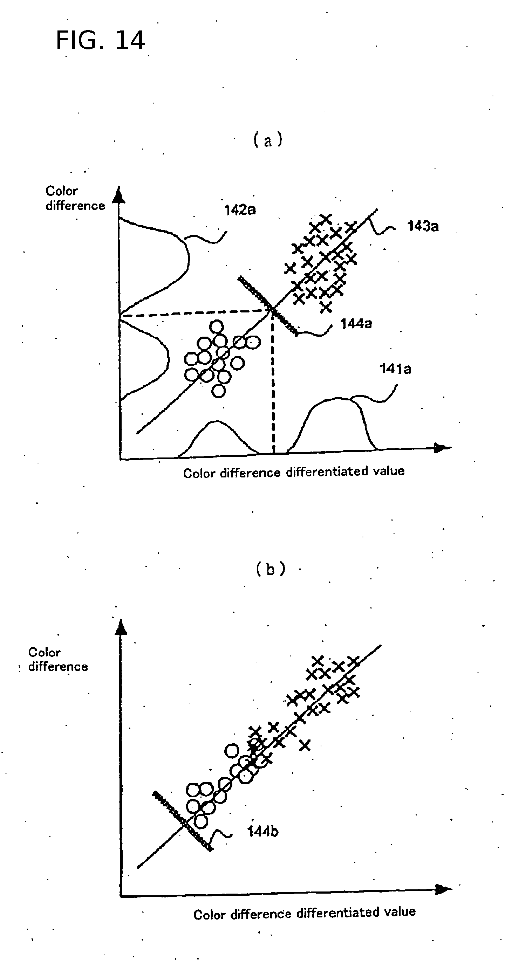

Next, the method for determination of the threshold value 135 will be described with reference to Fig. 14. in a graph of Fig. 14(a), the vertical axis is the maximum value of the color difference within each flaw candidate area extracted by the color hue and color difference, and the horizontal axis is the maximum value of color difference differentiated value of outline portion of each flaw area, and the value of true flaw 2 is plotted by " ×" and the value of the pseudo flaw 3, by "○". Further, 141a denotes a histogram of respective color difference differentiated values, 142a, a histogram of color difference values. In a case where a flaw and a pseudo flaw are apparently distinguished from each other, a judgment line 144a is a straight line 144a passing through the peak values of the histograms 141a and 142a and vertical to an inertial main axis 143a of the plotted points. Further, in a case where the flaw and the pseudo flaw are not separated, i.e., there is no peak of valley of histogram, the judgment line is a 144b. That is, all the flaw candidate areas are detected as flaws, so as to prevent oversight.

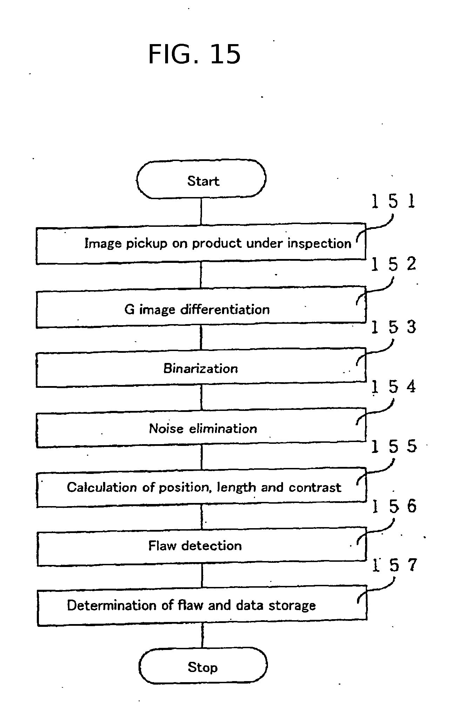

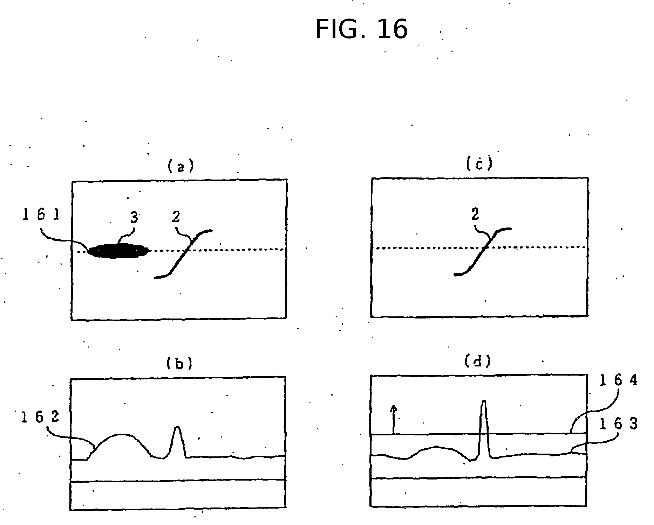

Next, a comparative method for flaw detection by magnetic particle testing will be described with reference to Figs. 15 and 16.

Fig. 15 shows an example of image processing algorithm to analyze the content of the image memory 7 in magnetic particle testing. An RGB image is read (151), next, differentiation processing is performed on a G image with the greatest amount of information on light emission from the fluorescent magnetic powder (152). By this processing, an area with significant linear luminance change such as a crack flaw is enhanced, while an area with high luminance but small luminance change such as accumulated magnetic powder is not enhanced.

Next, a binarization threshold value is determined from an average value of the G differentiated image, and binarization is performed (153). From the binarized image, image noise such as an isolated point is eliminated (154), then flaw candidates are obtained. Then, the length, contrast and the like of these flaw candidates are calculated (155). If these values are greater than predetermined values, the area is determined as a flaw.

Fig. 16 shows the method for discrimination between a flaw and a pseudo flaw. For example, as shown in (a), if the luminance distribution of the flaw 2 and the pseudo flaw 3 is plotted on a line 161, luminance distribution 162 as in (b) is obtained. The luminance values of the flaw 2 and the pseudo flaw 3 are approximately equivalent to each other. If the luminance distribution 162 is differentiated, luminance differentiated distribution 163 as shown in (b) is obtained. In the flaw 2, the luminance radically changes, while in the pseudo flaw 3, it smoothly changes. By judging the result of differentiation processing by using a judgment threshold value 164 as shown in (d), only the flaw 2 can be extracted as in (c).

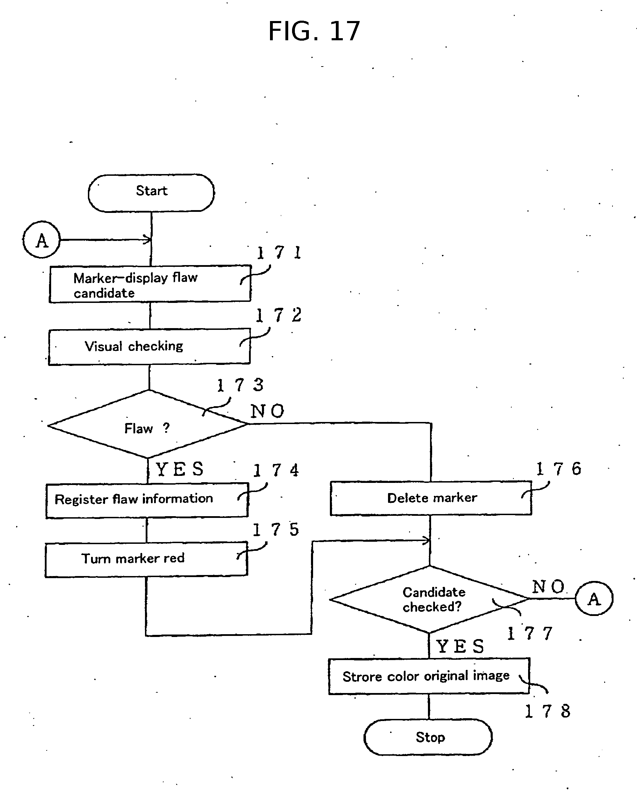

Referring to Fig. 17, flaw check and data storage will be described. The flaw and the pseudo flaw are separated by automatic inspection and only the flaw is extracted, however, to prevent oversight and misjudgment, in liquid penetrant inspection, flaw check is finally performed by visual observation.

Fig. 17 is a flowchart showing the flaw check process. First, a portion judged by automatic judgment as a flaw is marker-displayed as a flaw candidate (171). Next, a computer 5 requires the inspector to judge the flaw candidates one by one (172). The inspector judges whether or not the candidate is a true flaw by watching a color original image (173), and if the inspector judges that the candidate is a true flaw, the position, the length, the contrast and the like of the flaw are registered in the data storage device 7 (174), and the marker is turned to red (175).

In the flaw candidate check, if the inspector judges a candidate as a pseudo flaw, the marker is deleted (176). If another flaw candidate exists, the marker is displayed on the next flaw candidate. When all the flaw candidates have been checked (177), the color original image is stored in the data storage device 7 (178).

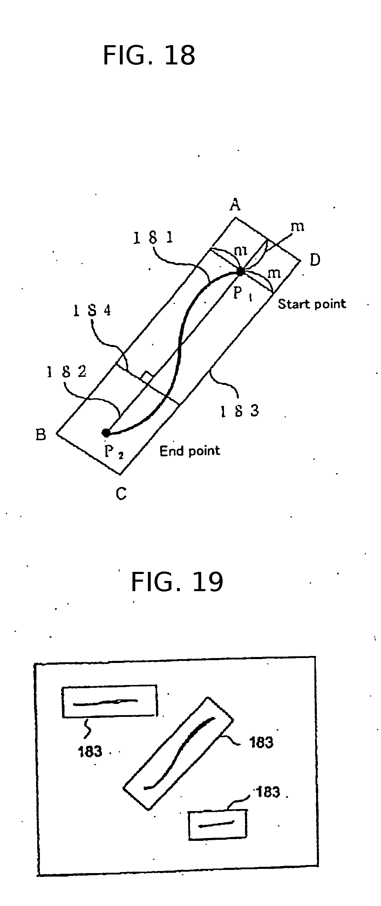

Fig. 18 shows an example of method for flaw candidate marker generation. In a flaw candidate 181, a central line 182 connecting a start point P1 to an end point P2 is obtained, and longer sides AG and CD of a flaw candidate marker 183 are set in a position in parallel to the central line and away from the line by a constant value m. Shorter sides AD and BC are similarly set. The length of flaw is the distance between the points P1 and P2. Note that the flaw candidate marker is not limited to a rectangular shape. The shorter sides AD and BC may be semicircular lines. It is important that the flaw is not hidden by the marker.

Fig. 19 shows an example of flaw candidate display method on a color monitor 9. The checking is required, sequentially from a long candidate, by using the original image. At first, all the markers are displayed in white, then a marker of a candidate judged as a true flaw is turned to another color, e.g., red, and a marker of a candidate judged as a pseudo flaw is deleted.

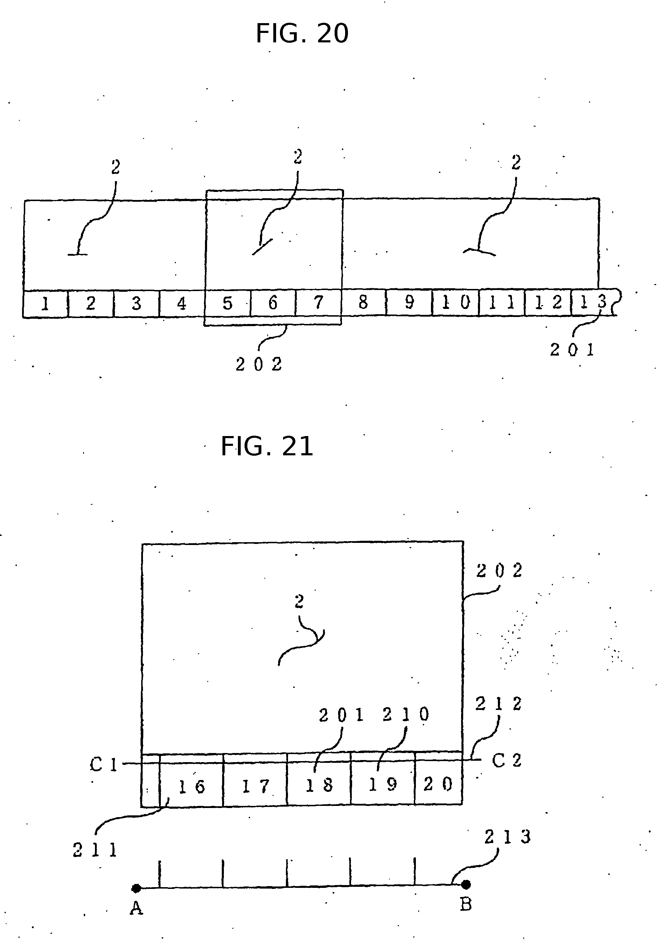

Fig. 20 shows an example of method for specifying an inspection position when the object under inspection 1 is a long object. A scale 201 with markings is fixed to the object under inspection 1, so that the scale 201 enters a part of camera view 202. The markings of the scale are, e.g., numerals at intervals of 1 centimeter. Further, the scale 201 for liquid penetrant inspection and a scale for a comparative method of magnetic particle testing may be in different colors. For example, in case of liquid penetrant inspection, the scale 201 is a white based scale with red markings and numerals, on the other hand, in case of comparative magnetic particle testing, the scale 201 is a white based scale with markings and numerals in green fluorescent color.

Fig. 21 shows an example of an image obtained by image pickup. The image of the scale 201 is simultaneously taken in a lower part of the image screen, and the camera position in the object under inspection 1 is calculated from the scale 201. That is, as the scale 201 has marking numerals 210 recognizable by the pattern matching method using the computer 5. Further, as the scale 201 has tick lines 211 at intervals of, e.g., 1 centimeter, a more detailed camera position can be calculated. As an image signal of testing line 212 of C1 to C2 on the image, a cross-section signal 213 is obtained. Then, positions of left end A and right end B, and E1, E2, E3, E4 and E5 of tick lines 211 are obtained. The image pickup magnification can be calculated from the positions of E1, E2, E3, E4 and E5, and with the marking numerals 210, the accurate position of the flaw 2 on the object under inspection 1 can be obtained.

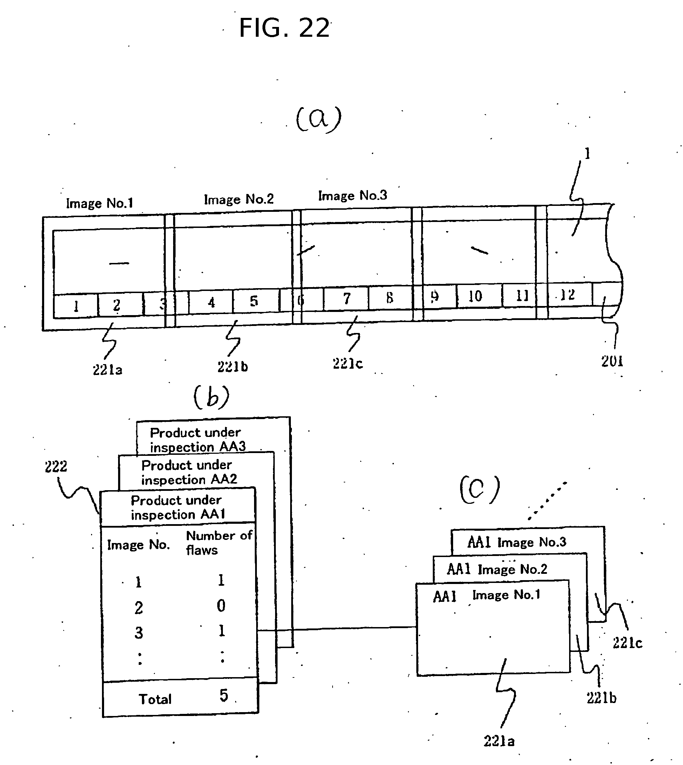

The result of inspection is stored into the storage device 7. Fig. 22 shows an example of the storage.

When a surface to be inspected of the object under inspection 1 is too large and the entire inspection surface is larger than one inspection image screen, the surface is divided into several images and image pickup and inspection are performed on the images. At this time, in the image to be divided, image pickup ranges overlap with each other by a small amount on the inspection surface. 221a, 221b an 221c denote divided images of the object under inspection 1. the inspection is performed on the respective divided images. As denoted by 222, as the result, the entire image information by each object under inspection is stored, and further, information on the position, the length, the area, the chromaticity and the color hue and the like of each flaw are stored with the image information.

The inspector first displays the data 222 of each object under inspection stored in the storage device 7 on the display screen of the monitor 6 and checks it, further, if the inspector wants to see in detail a portion of flaw, a corresponding divided image is read from the name of object under inspection and its image No, and is displayed on the display screen of the monitor 6. At this time, on the display screen of the monitor 6, the information on the position, the length, the area, the chromaticity and color hue, stored in correspondence with the displayed image data, can also be displayed.

Further, as detected flaw candidates are displayed with enhancement using a marker or the like on the display screen, oversight of a flaw which is larger than a size of about 0.1 to 0.3 mm, about the same size as that in conventional visual observation inspection, can be prevented.

Further, by increasing the image detection magnification, a flaw finer than a visually-observable size can be detected. Further, by enlarging and displaying the flaw finer than a visually-observable size on the display screen, the position, the length, the area, the chromaticity, the color hue and the like of the flaw can be checked on the display screen.

The invention may be embodied in other specific forms without departing from the scope of the claims. The present embodiment is therefor to be considered in all respects as illustrative and not restrictive, the scope of the invention being indicated by the appended claims rather than by the foregoing description and all changes which come within the scope of the claims are therefore intended to be embraced therein.

## Claims

1. A flaw inspection method by liquid penetrant testing, the method comprising:

   illuminating (24a) a surface of a sample (1) to be inspected;
   obtaining an image of the surface by a color video camera (21),the image containing RBG data;
   processing (5) the image obtained by the color video camera (21) to extract flaw candidates from the image displayed; and
   displaying (6) an image of an extracted flaw candidate obtained by said processing step,
   wherein
   a red penetrant liquid is applied to the surface of the sample (1) to be inspected and subsequently a white powder development agent is applied to the surface;
   the surface of the sample (1) is illuminated with polarized light; and
   before the processing step (5), said image obtained by said color video camera (21) is calibrated by using conversion parameters unique to said color video camera (21) which are used to convert the RBG data of the image to chromaticity x, y and luminance Y of the obtained image, and which are calculated from data of an image of a color chart (71) for calibration which contains white, pink and red picked up by said color video camera (21).

2. The flaw inspection method according to claim 1, wherein the image displayed in the displaying step is associated with a positional information.

3. The flaw inspection method according to claim 2, wherein the positional information is obtained with the image in the obtaining step.

4. The flaw inspection method according to claim 1, further comprising the steps of:

   detecting a flaw from the extracted flaw candidate; and

storing an image of the detected flaw into memory (4).

5. An apparatus for liquid penetrant testing, comprising:

an illuminator (24a) which is arranged to illuminate a surface of a sample (1) to be inspected, an image pickup unit which is arranged to pick up an image of the surface by a color video camera (21), the image containing RBG data;

a computer (5) having a processor for processing an image picked up by said image pickup unit to extract flaw candidates from the image picked up;

a memory means (4) for storing an image processed by said processor, and

a display unit (6) which is arranged to display said image stored in said memory, wherein

said illuminator is arranged to illuminate said sample (1) with polarized light when the surface having a red penetrant liquid applied thereto and subsequently a white powder development agent applied thereto;

said processor is arranged to calibrate said image using conversion parameters which are used to convert the RBG data of the image to chromaticity x, y and luminance Y of the obtained image, and which are calculated from data of an image of a color chart (71) for calibration which contains white, red and plural colors with the chromaticity between white and red picked up by said image pickup unit.

6. The apparatus according to claim 5, wherein said display unit (6) is arranged to display said image associating with a positional information.

7. The apparatus according to claim 6, wherein said positional information is obtained by said image pick up unit with the image.

8. The apparatus according to claim 6, wherein said processor is arranged to process said image to extract a flaw candidate (171), and said memory means (4) is arranged to store an image of said extracted flaw candidate (178).

9. A computer memory storing code which, when run on a computer, causes the method of any one of claims 1 to 5 to be carried out.

**Patentansprüche**

1. Fehleruntersuchungsverfahren mittels Flüssigkeitseindringprüfung, wobei das Verfahren umfasst:

Beleuchten (24a) einer Oberfläche einer zu untersuchenden Probe (1);

Erhalten eines Bildes der Oberfläche mittels einer Farbvideokamera (21), wobei das Bild RBG-Daten enthält;

Verarbeiten (5) des von der Farbvideokamera (21) erhaltenen Bildes, um Fehlerkandidaten aus dem angezeigten Bild zu extrahieren; und

Anzeigen (6) eines Bildes eines im Verarbeitungsschritt erhaltenen extrahierten Fehlerkandidaten, wobei

eine rote Eindringflüssigkeit auf die Oberfläche der zu untersuchenden Probe (1) angewendet wird und anschließend ein Weißpulver-Entwicklungswirkstoff auf die Oberfläche angewendet wird;

die Oberfläche der Probe (1) mit polarisiertem Licht beleuchtet wird und

vor dem Verarbeitungsschritt (5) das von der Farbvideokamera (21) erhaltene Bild unter Verwendung von eindeutig der Farbvideokamera (21) zugeordneten Umwandlungsparametern kalibriert wird, die zum Umwandeln der RBG-Daten des Bildes in Chromatizität x, y und Helligkeit Y des erhaltenen Bildes verwendet werden und die aus Daten eines Bildes einer Farbtafel (71) zur Kalibrierung berechnet werden, die weiß, rosa und rot, von der Farbvideokamera (21) aufgenommen, enthält.

2. Fehleruntersuchungsverfahren nach Anspruch 1, wobei das im Anzeigeschritt angezeigte Bild mit Positionsinformationen verknüpft wird.

3. Fehleruntersuchungsverfahren nach Anspruch 2, wobei die Positionsinformationen mit dem Bild im Erhaltungsschritt erhalten werden.

4. Fehleruntersuchungsverfahren nach Anspruch 1, ferner umfassend die folgenden Schritte:

Detektieren eines Fehlers aus dem extrahierten Fehlerkandidaten und
Speichern eines Bild des detektierten Fehlers in einen Speicher (4).

**5.** Vorrichtung zur Flüssigkeitseindringprüfung, umfassend:

eine Beleuchtungseinrichtung (24a), die dazu ausgelegt ist, eine Oberfläche einer zu untersuchenden Probe (1) zu beleuchten, eine Bildaufnahmeeinheit, die dazu ausgelegt ist, ein Bild der Oberfläche mittels einer Farbvideokamera (21) aufzunehmen, wobei das Bild RBG-Daten enthält;
einen Computer (5) mit einem Prozessor zum Verarbeiten eines von der Bildaufnahmeeinheit aufgenommenen Bildes, um Fehlerkandidaten aus dem aufgenommenen Bild zu extrahieren;
eine Speichereinrichtung (4) zum Speichern eines vom Prozessor verarbeiteten Bildes und
eine Anzeigeeinheit (6), die dazu ausgelegt ist, das im Speicher gespeicherte Bild anzuzeigen,
wobei
die Beleuchtungseinrichtung dazu ausgelegt ist, die Probe (1) mit polarisiertem Licht zu beleuchten, wenn die Oberfläche mit roter Eindringflüssigkeit behandelt und anschließend mit einem Weißpulverentwicklungswirkstoff behandelt wird;
der Prozessor dazu ausgelegt ist, das Bild unter Verwendung von Umwandlungsparametern zu kalibrieren, die zum Umwandeln der RBG-Daten des Bildes in Chromatizität x, y und Helligkeit Y des erhaltenen Bildes verwendet werden und die aus Daten eines Bildes einer Farbtafel (71) zur Kalibrierung berechnet werden, die weiß, rot und mehrere Farben mit Chromatizität zwischen weiß und rot, von der Bildaufnahmeeinheit aufgenommen, enthält.

**6.** Vorrichtung nach Anspruch 5, wobei die Anzeigeeinheit (6) dazu ausgelegt ist, das Bild verknüpft mit Positionsinformationen anzuzeigen.

**7.** Vorrichtung nach Anspruch 6, wobei die Positionsinformationen von der Bildaufnahmeeinheit mit dem Bild erhalten werden.

**8.** Vorrichtung nach Anspruch 6, wobei der Prozessor dazu ausgelegt ist, das Bild so zu verarbeiten, dass ein Fehlerkandidat (171) extrahiert wird, und die Speichereinrichtung (4) dazu ausgelegt ist, ein Bild des extrahierten Fehlerkandidaten (178) zu speichern.

**9.** Computerspeicher, der Code speichert, der, wenn er auf einem Computer ausgeführt wird, die Ausführung des verfahrens nach einem der Ansprüche 1 bis 5 veranlasst.

**Revendications**

**1.** Procédé d'inspection de défauts par un contrôle par ressuage, le procédé comportant :

d'éclairer (24a) une surface d'un échantillon (1) à inspecter,
d'obtenir une image de la surface par une caméra vidéo couleur (21), l'image contenant des données RVB,
de traiter (5) l'image obtenue par la caméra vidéo couleur (21) afin d'extraire des défauts candidats de l'image affichée, et
d'afficher (6) une image d'un défaut candidat extrait obtenu par l'intermédiaire de ladite étape de traitement, dans lequel
un liquide pénétrant rouge est appliqué à la surface de l'échantillon (1) à inspecter et ensuite un agent de développement de poudre blanche est appliqué à la surface,
la surface de l'échantillon (1) est éclairée à l'aide d'une lumière polarisée, et
avant l'étape de traitement (5), ladite image obtenue par ladite caméra vidéo couleur (21) est étalonnée en utilisant des paramètres de conversion uniques à ladite caméra vidéo couleur (21) lesquels sont utilisés pour convertir les données RVB de l'image en chromaticité x, y et en luminance Y de l'image obtenue, et lesquels sont calculés à partir de données d'une image d'une charte des couleurs (71) pour l'étalonnage qui contient du blanc, du rose et du rouge recueillis par ladite caméra vidéo couleur (21).

**2.** Procédé d'inspection des défauts selon la revendication 1, dans lequel l'image affichée à l'étape d'affichage est associée à des informations de position.

**3.** Procédé d'inspection des défauts selon la revendication 2, dans lequel les informations de position sont obtenues avec l'image à l'étape d'obtention.

**4.** Procédé d'inspection des défauts selon la revendication 1, comportant en outre les étapes consistant à :

détecter un défaut à partir du défaut candidat extrait, et
mémoriser une image du défaut détecté dans la mémoire (4).

**5.** Appareil pour un contrôle par ressuage, comportant :

un dispositif d'éclairage (24a) lequel est conçu pour éclairer une surface d'un échantillon (1) à inspecter, une unité de recueil d'image laquelle est conçue pour recueillir une image de la surface par l'intermédiaire d'une caméra vidéo couleur (21), l'image contenant des données RVB,
un ordinateur (5) ayant un processeur pour traiter une image recueillie par ladite unité de recueil d'image afin d'extraire des défauts candidats de l'image recueillie,
des moyens de mémoire (4) pour mémoriser une image traitée par ledit processeur, et
l'unité d'affichage (6) laquelle est conçue pour afficher ladite image mémorisée dans ladite mémoire,
dans lequel
ledit dispositif d'éclairage est conçu pour éclairer ledit échantillon (1) à l'aide d'une lumière polarisée lorsque la surface a un liquide pénétrant rouge appliqué à celle-ci et ensuite un agent de développement de poudre blanche appliqué à celle-ci,
ledit processeur est conçu pour étalonner ladite image en utilisant des paramètres de conversion lesquels sont utilisés pour convertir les données RVB de l'image en chromaticité x, y et en luminance Y de l'image obtenue, et lesquels sont calculés à partir de données d'une image d'une charte des couleurs (71) pour l'étalonnage qui contient du blanc, du rouge et plusieurs couleurs avec la chromaticité entre le blanc et le rouge recueillie par ladite unité de recueil d'images.

**6.** Appareil selon la revendication 5, dans lequel ladite unité d'affichage (6) est conçue pour afficher ladite image en association avec des informations de position.

**7.** Appareil selon la revendication 6, dans lequel lesdites informations de position sont obtenues par ladite unité de recueil d'images avec l'image.

**8.** Appareil selon la revendication 6, dans lequel ledit processeur est conçu pour traiter ladite image afin d'extraire un défaut candidat (171), et lesdits moyens de mémoire (4) sont conçus pour mémoriser une image dudit défaut candidat extrait (178).

**9.** Mémoire informatique mémorisant du code lequel, lorsqu'il est exécuté sur un ordinateur, amène le procédé selon l'une quelconque des revendications 1 à 5 à être mis en oeuvre.

FIG.1

(a)

(b)

FIG.2

FIG.3

(a)     (b)

FIG.4

(a)

(b)

# FIG.5

```
                    ┌──────────────┐
                    │    Start     │
                    └──────┬───────┘
                           │                          5,0
┌──────────────────────────────────────────────┐
│    Image pickup on product under inspection    │
└──────────────────────┬─────────────────────────┘
                       │                           5,1
┌──────────────────────────────────────────────┐
│              Chromaticity conversion            │
└──────────────────────┬─────────────────────────┘
                       │                           5,2
┌──────────────────────────────────────────────┐
│         Determination of reference white        │
└──────────────────────┬─────────────────────────┘
                       │                           5,3
┌──────────────────────────────────────────────┐
│     Calculate color hue and color difference    │
└──────────────────────┬─────────────────────────┘
                       │                           5,4
┌──────────────────────────────────────────────┐
│           Extract flaw candidate area           │
│                                                 │
└──────────────────────┬─────────────────────────┘
                       │                           5,5
┌──────────────────────────────────────────────┐
│         Differentiate color difference image    │
└──────────────────────┬─────────────────────────┘
                       │                           5,6
┌──────────────────────────────────────────────┐
│               Shape measurement                 │
└──────────────────────┬─────────────────────────┘
                       │                           5,7
┌──────────────────────────────────────────────┐
│                Flaw detection                   │
└──────────────────────┬─────────────────────────┘
                       │                           5,8
┌──────────────────────────────────────────────┐
│      Determination of flaw and data storage     │
└──────────────────────┬─────────────────────────┘
                       │
                ┌──────┴───────┐
                │     Stop     │
                └──────────────┘
```

Extract flaw candidate area

$$\theta_1 \leqq \theta \leqq \theta_2 \text{ and } d_1 \leqq d \leqq d_2$$

FIG.6

FIG.7

FIG.8

Start

81
Image pickup by camera on 3 or more colors

82
Calculate RGB values of respective colors

83
Measure chromaticity x, y, luminance Y of respective colors by colorimeter

84
Calculate chromaticity conversion parameters

Stop

# FIG. 9

(a)

(b)

(c)

# FIG. 10

(a)

Chromaticity image

(b)

(C)

Color hue image

# FIG. 11

(a)

Chromaticity(Xij, yij)

Chromaticity image

(b)

y chromaticity

y ij

Reference
white

y c

d ij
Color
difference

0

X c.        X i j

x chromaticity

(c)

Color difference
(d ij)

Color difference image

21

FIG. 12

FIG. 13

# FIG. 14

( a )

Color difference

142a

143a

144a

141a

Color difference differentiated value

( b ) ·

Color difference

144b

Color difference differentiated value

# FIG. 15

```
        ┌─────────────────┐
        │      Start       │
        └────────┬─────────┘
                 │                              1 5 1
        ┌────────┴──────────────────────────┐
        │ Image pickup on product under inspection │
        └────────┬──────────────────────────┘
                 │                              1 5 2
        ┌────────┴──────────────────────────┐
        │      G image differentiation       │
        └────────┬──────────────────────────┘
                 │                              1 5 3
        ┌────────┴──────────────────────────┐
        │            Binarization            │
        └────────┬──────────────────────────┘
                 │                              1 5 4
        ┌────────┴──────────────────────────┐
        │         Noise elimination          │
        └────────┬──────────────────────────┘
                 │                              1 5 5
        ┌────────┴──────────────────────────┐
        │ Calculation of position, length and contrast │
        └────────┬──────────────────────────┘
                 │                              1 5 6
        ┌────────┴──────────────────────────┐
        │           Flaw detection           │
        └────────┬──────────────────────────┘
                 │                              1 5 7
        ┌────────┴──────────────────────────┐
        │ Determination of flaw and data storage │
        └────────┬──────────────────────────┘
                 │
        ┌────────┴─────────┐
        │       Stop       │
        └──────────────────┘
```

# FIG. 16

( a )

161

3

2

( c )

2

( b )

162

( d )

164

163

# FIG. 17

```
                    ┌──────────┐
                    │  Start   │
                    └──────────┘
                          │
   ┌───┐                  │
   │ A │─────────────────>│
   └───┘                  │        171
              ┌───────────────────┐
              │ Marker-display flaw│
              │ candidate          │
              └───────────────────┘
                          │        172
              ┌───────────────────┐
              │  Visual checking   │
              └───────────────────┘
                          │        173
                       ◇ Flaw ? ◇──────── NO ───────┐
                          │                          │
                        YES        174               │        176
              ┌───────────────────┐      ┌───────────────────┐
              │Register flaw info  │      │   Delete marker    │
              └───────────────────┘      └───────────────────┘
                          │        175              │
              ┌───────────────────┐                 │
              │  Turn marker red   │                 │
              └───────────────────┘                 │
                          │                          │
                          └──────────────>◇Candidate checked?◇── NO ──(A)
                                                     │        177
                                                   YES
                                        ┌───────────────────┐
                                        │Strore color original image│
                                        └───────────────────┘
                                                     │        178
                                              ┌──────────┐
                                              │  Stop    │
                                              └──────────┘
```

26

## FIG. 18

## FIG. 19

## FIG. 20

| 2 | | | | 2 | | | | | | | | 2 | |
|---|---|---|---|---|---|---|---|---|---|---|---|---|---|
| 1 | 2 | 3 | 4 | 5 | 6 | 7 | 8 | 9 | 10 | 11 | 12 | 13 | |

202

201

## FIG. 21

2

202

201  210    212

C1 —

| 16 | 17 | 18 | 19 | 20 |
|----|----|----|----|----|

C2

211

213

A                                    B

# FIG. 22

## (a)

Image No.1  Image No.2  Image No.3

| 1 | 2 | 3 | 4 | 5 | 6 | 7 | 8 | 9 | 10 | 11 | 12 |

221a  221b  221c  201

## (b)

222

Product under inspection AA3
Product under inspection AA2
Product under inspection AA1

| Image No. | Number of flaws |
|---|---|
| 1 | 1 |
| 2 | 0 |
| 3 | 1 |
| : | : |
| Total | 5 |

## (c)

AA1 Image No.3
AA1 Image No.2
AA1 Image No.1

221a  221b  221c

**EP 1 096 249 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5047851 A
- JP 10300688 B
- JP 06300739 B
- WO 0060344 A
- EP 1167964 A
- EP 1167964 A1